(19) Europäisches Patentamt
European Patent Office
Office européen des brevets

(11) Veröffentlichungsnummer: **0 289 458 B1**

(12) **EUROPÄISCHE PATENTSCHRIFT**

(45) Veröffentlichungstag der Patentschrift: **02.02.94**

(51) Int. Cl.[5]: **C09B 31/08**, D06P 1/39, D06P 1/06, C09D 11/00, D21H 11/00

(21) Anmeldenummer: **88810248.0**

(22) Anmeldetag: **19.04.88**

(54) **Anionische Disazofarbstoffe.**

(30) Priorität: **27.04.87 CH 1594/87**

(43) Veröffentlichungstag der Anmeldung:
**02.11.88 Patentblatt 88/44**

(45) Bekanntmachung des Hinweises auf die Patenterteilung:
**02.02.94 Patentblatt 94/05**

(84) Benannte Vertragsstaaten:
**BE CH DE FR GB IT LI**

(56) Entgegenhaltungen:
**DE-A- 1 644 214**
**US-A- 2 026 920**

(73) Patentinhaber: **CIBA-GEIGY AG**
**Klybeckstrasse 141**
**CH-4002 Basel(CH)**

(72) Erfinder: **Adam, Jean-Marie, Dr.**
**Rue de Village Neuf 60 D**
**F-68300 Rosenau(FR)**
Erfinder: **Käser, Adolf, Dr.**
**Spitzackerstrasse 118**
**CH-4103 Bottmingen(CH)**

**EP 0 289 458 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Gegenstand der vorliegenden Erfindung sind anionische Disazofarbstoffe der Formel

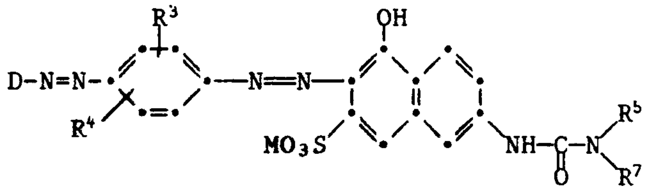

(1)

worin D einen Rest der Formel

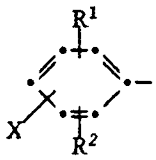

oder

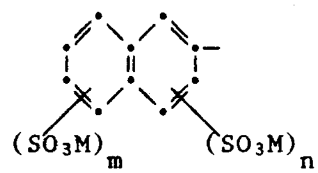

(a) (b)

| | |
|---|---|
| X | -COOM oder $-SO_3M$, |
| $R^1$ und $R^2$ | jeweils unabhängig voneinander Wasserstoff, Alkyl oder Alkoxy mit jeweils 1 bis 4 C-Atomen in den Alkylresten bedeuten, |
| m | für 0, 1 oder 2 |
| n | für 0 oder 1 und |
| m + n | für 1 oder 2 stehen, wobei zwei sich am gleichen Ring befindliche Sulfogruppen nicht orthoständig zueinander sind, |
| $R^3$ | Wasserstoff, Alkyl oder Alkoxy mit jeweils 1 bis 4 C-Atomen in den Alkylresten, |
| $R^4$ | Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind, |
| $R^5$ | Wasserstoff, $C_1$-$C_4$-Alkyl oder einen Rest |

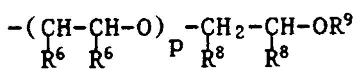 ,

| | |
|---|---|
| $R^6$ und $R^8$ | unabhängig voneinander jeweils Wasserstoff oder Alkyl mit 1 oder 2 C-Atomen bedeuten, wobei jedoch ein Rest $R^6$ und ein Rest $R^8$ Wasserstoff sein müssen, |
| $R^7$ | Wasserstoff, $C_5$-$C_7$-Cycloalkyl, $C_1$-$C_6$-Alkyl, welches unsubstituiert ist oder durch Amino, $C_1$-$C_4$-Alkylamino oder Di-$C_1$-$C_4$-Alkylamino substituiert ist, einen Rest der Formel |

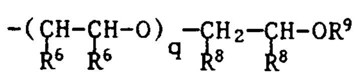

| | |
|---|---|
| | oder einen Rest der Formel -A-Y, |
| $R^9$ | Wasserstoff oder $C_1$-$C_4$-Alkyl, |
| A | eine direkte Bindung oder einen geradkettigen oder verzweigten $C_1$-$C_6$-Alkylenrest, |
| Y | Phenyl oder Naphthyl, unsubstituiert oder substituiert durch Sulfo, Carboxy, Halogen, $C_1$-$C_4$-Alkyl, $C_1$-$C_4$-Alkoxy, $C_1$-$C_4$-Alkyloxycarbonyl oder Hydroxy-$C_1$-$C_4$-Alkyloxycarbonyl oder |
| $R^5$ und $R^7$ | zusammen mit dem sie verbindenden N-Atom einen Pyrrolidin-, Piperidin-, Morpholin- oder einen Piperazinrest, der gegebenenfalls am nicht mit dem Triazinring verbundenen N-Atom durch $C_1$-$C_4$-Alkyl, Hydroxy-$C_1$-$C_4$-Alkyl oder Amino-$C_1$-$C_4$-Alkyl substituiert ist, |

p und q jeweils unabhängig voneinander 0 oder eine ganze Zahl bis maximal 3 und
M Wasserstoff oder ein Aequivalent eines farblosen Kations bedeuten.
X in dem Rest der Formel (a) bedeutet vorzugsweise die Sulfogruppe.

$R^1$ bzw. $R^2$ als Alkyl bedeutet z.B. Methyl, Ethyl, n-Propyl, iso-Propyl, n-Butyl oder tert.-Butyl; $R^1$ bzw. $R^2$ als Alkoxy steht z.B. für Methoxy, Ethoxy oder Butoxy.

Bevorzugt bedeutet $R^1$ Wasserstoff, Methyl, Methoxy oder Ethoxy, insbesondere Wasserstoff, Methyl oder Methoxy und ganz besonders bevorzugt Wasserstoff oder Methyl.

$R^2$ steht bevorzugt für Wasserstoff oder Methyl und ganz besonders bevorzugt für Wasserstoff.

Bedeuten $R^1$ und $R^2$ Wasserstoff, so kann sich der Rest X in ortho-, meta- oder para-Position zur Azogruppe befinden.

Liegt neben dem Rest X ein weiterer Substituent vor, so sind der Rest X und der Substituent $R^1$ bzw. $R^2$ bevorzugt meta-ständig zueinander, und zwar vorzugsweise in den Stellungen 2 und 4 zur Azogruppe. Ebenso bevorzugt befindet sich der Rest X in 3- bzw. 5-oder 4-Stellung zur Azogruppe und der Rest $R^1$ bzw. $R^2$ ortho- oder para-ständig zum Rest X, d.h. die Reste X und $R^1$ bzw. $R^2$ befinden sich bevorzugt in 2,5- oder 3,4-Stellung zur Azogruppe.

Liegen neben dem Rest X zwei weitere Substituenten von, so befindet sich der Rest X vorzugsweise in Stellung 4 oder 5 und die beiden Reste $R^1$ und $R^2$ in den Stellungen 2,5 bzw. 2,4 zur Azogruppe.

Bedeutet D einen Rest der Formel (b), so können in diesem zwei sich am gleichen Ring befindliche Sulfogruppen nicht ortho-ständig zueinander sein. Liegt in dem Rest der Formel (b) eine Sulfogruppe vor, so befindet sich diese beispielsweise in den Stellungen 5, 6, 7 oder 8, wobei die Stellungen 5 und 6 bevorzugt sind. Ist der Rest der Formel (b) durch zwei Sulfogruppen substituiert, so befinden sich diese beispielsweise in den Positionen 3,6; 3,7; 4,8; 5,7 oder 6,8, wovon die Positionen 3,6; 4,8 und 6,8 bevorzugt sind.

Bevorzugt steht D für einen Rest der Formel (a).

Bedeuten $R^3$ und/oder $R^4$ Alkyl- oder Alkoxygruppen, so handelt es sich z.B. um die bei $R^1$ und $R^2$ aufgezählten Gruppen. Vorzugsweise bedeuten $R^3$ und $R^4$ unabhängig voneinander jeweils Wasserstoff, Methyl, Methoxy oder Ethoxy und insbesondere jeweils Wasserstoff.

$R^5$ bedeutet vorzugsweise Methyl, Ethyl, einen Rest $-CH_2-CH_2-OH$ oder vor allem Wassserstoff.

Die bevorzugten Bedeutungen von $R^6$, $R^8$ und $R^9$ sind unabhängig voneinander jeweils Methyl oder vor allem Wasserstoff.

p und q bedeuten vorzugsweise jeweils 1 und insbesondere 0.

$R^5$ und $R^7$ können auch zusammen mit dem sie verbindenden N-Atom einen Piperidin-, Morpholin- oder Piperazinrest bilden. Der Piperazinrest kann am nicht mit dem Triazinring verbundenen N-Atom durch $C_1$-$C_4$-Alkyl oder Hydroxy-$C_1$-$C_4$-Alkyl oder Amino-$C_1$-$C_4$-Alkyl substituiert sein. Der bevorzugte Substituent ist Hydroxyethyl.

Die bevorzugten Bedeutungen von $R^7$ sind Methyl, Ethyl, Hydroxyethyl, Aminoethyl, welches gegebenenfalls am N-Atom durch $C_1$-$C_4$-Alkyl mono- oder dialkyliert ist, eine Gruppe der Formel

$$-(CH_2-CH_2-O)_p-CH_2-CH_2-OH,$$

wobei p O oder 1 ist, oder eine Gruppe -A-Y, wobei A und Y die unter der Formel (1) angeführten Bedeutungen besitzen.

Falls A einen geradkettigen oder verzweigten $C_1$-$C_6$-Alkylenrest darstellt, so handelt es sich z.B. um Methylen, Ethylen, Ethyliden, Propylen, Trimethylen, Ethylethylen, 1-Methyl-1,3-trimethylen, wobei Methylen und Ethylen bevorzugt sind. Von besonderem Interesse sind jedoch die Verbindungen der Formel (1), bei denen A eine direkte Bindung darstellt, d.h. bei denen der Phenyl- oder Naphthylrest direkt an das N-Atom gebunden ist.

Geeignete Substituenten für den Phenyl- und Naphthylrest sind z.B. Sulfo, Carboxy, Methyl, Ethyl, Methoxy, Ethoxy, Chlor, Methoxycarbonyl, Ethoxycarbonyl oder Hydroxyethoxycarbonyl.

Vorzugsweise handelt es sich bei Y um einen Naphthylrest, der eine oder zwei Sulfogruppen trägt, oder um einen unsubstituierten oder durch Sulfo, Carboxy, Chlor, Methyl, Methoxy, Ethoxy, Ethoxycarbonyl oder Hydroxyethoxycarbonyl substituierten Phenylrest.

Besonders bevorzugt sind Verbindungen der Formel (1), bei denen Y einen unsubstituierten oder durch Sulfo oder Carboxy substituierten Phenylrest bedeutet.

M bedeutet Wasserstoff oder ein Aequivalent eines farblosen Kations, beispielsweise Lithium, Natrium, Kalium, Ammonium oder die protonierte Form eines $C_4$-$C_{12}$-Trialkylamins, $C_4$-$C_{12}$-Diamins oder $C_2$-$C_{12}$-Alkanolamins.

Bei M in der Bedeutung eines protonierten $C_4$-$C_{12}$-Trialkylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin handeln; geeignet sind auch Gemische verschiedener protonierter Amine.

Hat M die Bedeutung protoniertes $C_4$-$C_{12}$-Diamin, handelt es sich z.B. um ein Ethylendiamin oder 1,3-Diaminopropan, bei dem eines oder beide N-Atome zusätzlich mit einem oder zwei $C_1$-$C_4$-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar. Beispiele sind: N-Ethylethylendiamin, N,N-Dimethylethylendiamin, N,N'-Dimethylethylendiamin, N,N-Diethylethylendiamin, 3-Dimethylamino-1-propylamin oder 3-Diethylamino-1-propylamin.

Steht M für ein protoniertes $C_2$-$C_{12}$-Alkanolamin, so kann es sich z.B. um die protonierte Form eines Monoalkanol-, Dialkanol-, Monoalkanolmonoalkyl-, Monoalkanoldialkyl-, Dialkanolalkyl- oder Trialkanolamins oder um ein Gemisch verschiedener protonierter Alkanolamine handeln. Beispiele sind protoniertes 2-Aminoethanol, Di-(2-hydroxyethyl)-amin, N-(2-Hydroxyethyl)-methylamin, N-(2-Hydroxyethyl)-dimethylamin, N-(2-Hydroxyethyl)-diethylamin, N,N-Di-(2-hydroxyethyl)-methylamin, N,N-Di-(2-hydroxyethyl)-ethylamin oder Tri-(2-hydroxyethyl)-amin, 2-(2-Aminoethoxy)-ethanol oder Diethylaminopropylamin.

Vorzugsweise hat M die Bedeutung $Na^{\oplus}$, $Li^{\oplus}$ oder protoniertes $C_4$-$C_6$-Alkanolamin, wobei bei den $C_4$-$C_6$-Alkanolaminen Tri-(2-hydroxyethyl)-amin, Di-(2-hydroxyethyl)-amin oder ein Gemisch dieser beiden Amine bevorzugt ist.

Eine besonders bevorzugte Ausführungsform der Erfindung sind die Disazofarbstoffe der Formel

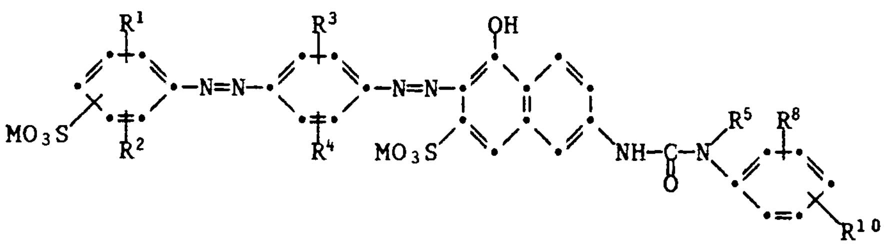

(2)

worin

| | |
|---|---|
| $R^1$ und $R^2$ | jeweils unabhängig voneinander Wasserstoff, Alkyl oder Alkoxy mit jeweils 1 bis 4 C-Atomen in den Alkylresten, |
| $R^3$ | Wasserstoff, Alkyl oder Alkoxy mit jeweils 1 bis 4 C-Atomen in den Alkylresten, |
| $R^4$ | Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind, |
| $R^5$ | Wasserstoff, Methyl, Ethyl oder einen Rest |

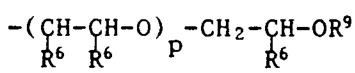

,

| | |
|---|---|
| $R^6$ | Wasserstoff oder Alkyl mit 1 oder 2 C-Atomen, |
| $R^8$ | Wasserstoff, Sulfo oder Carboxy, |
| $R^9$ | Wasserstoff oder $C_1$-$C_4$-Alkyl, |
| $R^{10}$ | Wasserstoff, Sulfo, Carboxy, Chlor, Methyl, Methoxy, Ethoxy, Ethoxycarbonyl oder Hydroxyethoxycarbonyl, |
| p | 0 oder 1 und |
| M | Wasserstoff oder ein Aequivalent eines farblosen Kations bedeuten. |

Unter diesen sind diejenigen besonders bevorzugt, bei denen $R^1$ Wasserstoff, Methyl oder Methoxy, $R^2$ Wasserstoff oder Methyl, $R^3$ und $R^4$ jeweils unabhängig voneinander Wasserstoff, Methyl, Methoxy oder Ethoxy, $R^5$ Wasserstoff oder Hydroxyethyl, $R^8$ Wasserstoff, Sulfo oder Carboxy, $R^9$ und $R^{10}$ je Wasserstoff und M $Na^{\oplus}$, $Li^{\oplus}$ oder protoniertes $C_4$-$C_6$-Alkanolamin bedeuten.

Die Herstellung der Disazofarbstoffe der Formel (1) erfolgt in an sich bekannter Art und Weise, beispielsweise indem man eine Verbindung der Formel

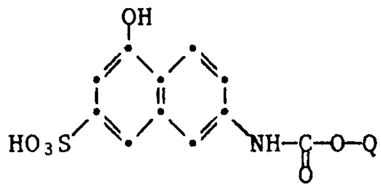

(3)

worin Q ein gegebenenfalls substituierter Phenyl- oder Alkylrest ist, mit einem Amin der Formel

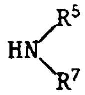

(4)

umsetzt, wobei man entweder die Verbindung der Formel (3) oder das Umsetzungsprodukt aus der Verbindung (3) und dem Amin der Formel (4) mit einem diazotierten Amin der Formel

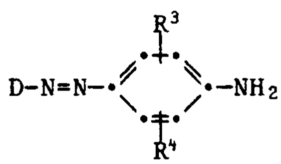

(5)

kuppelt. In den Formeln (4) und (5) weisen $R^5$, $R^7$, D, $R^3$ und $R^4$ die unter der Formel (1) angegebene Bedeutung auf.

Die Disazofarbstoffe der Formel (1) können auch hergestellt werden, indem man I-Säure (7-Amino-4-hydroxy-2-naphthalinsulfonsäure) mit einem Isocyanat der Formel

OCN-A-Y' (6)

zu einer Verbindung der Formel

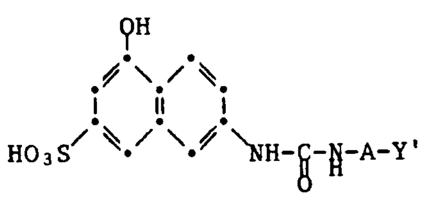

(7)

umsetzt und anschliessend mit einem diazotierten Amin der Formel (5) kuppelt, wobei Y' Phenyl oder Naphthyl bedeutet, welches unsubstituiert oder durch Sulfo, Halogen, $C_1$-$C_4$-Alkyl, $C_1$-$C_4$-Alkoxy oder $C_1$-$C_4$-Alkoxycarbonyl substituiert ist.

Eine weitere Möglichkeit zu Herstellung der Disazofarbstoffe der Formel (1) besteht darin, dass man zunächst I-Säure mit einem diazotierten Amin der Formel (5) kuppelt, und das Reaktionsprodukt dann mit einem Isocyanat der Formel (6) acyliert.

Vorzugsweise kuppelt man zunächst eine Verbindung der Formel (3) mit einem diazotierten Amin der Formel (5) und setzt die erhaltene Disazoverbindung anschliessend mit einem Amin der Formel (4) um, wobei diese Reaktionen ohne Isolierung der Zwischenstufen durchgeführt werden oder man setzt I-Säure mit einem Isocyanat der Formel (6) und dann mit einem diazotierten Amin der Formel (5) um.

Die Verbindungen der Formeln (3), (4), (5) und (6) sind bekannt oder können auf bekannte Art und Weise erhalten werden.

Auch die Kupplungsreaktion erfolgt auf an sich bekannte Art und Weise, beispielsweise bei einer Temperatur zwischen 0 und 75 °C, vorzugsweise zwischen 0 und 35 °C, und bei einem pH-Wert zwischen 5 und 9.

Die Umsetzung der Verbindung der Formel (3) oder der aus der Verbindung der Formel (3) und dem diazotierten Amin der Formel (5) erhaltenen Disazoverbindung mit dem Amin der Formel (4) erfolgt ebenfalls auf an sich bekannte Art und Weise, beispielsweise bei einer Temperatur zwischen 30 und 100 °C in wässriger Lösung bei einem pH-Wert von 7 bis 9.

Ebenfalls auf an sich bekannte Art und Weise erfolgt die Umsetzung von I-Säure, bzw. des Kupplungsproduktes aus I-Säure und einem diazotierten Amin der Formel (5), mit einem Isocyanat der Formel (6).

Die erhaltenen Verbindungen der Formel (1) können auf an sich bekannte Weise isoliert werden, z.B. durch Aussalzen.

Das farblose Kation M kann ebenfalls durch bekannte Methoden eingeführt werden, z.B. über die Farbsäure, durch Ionenpaarextraktion oder via Membrantechnologie.

Verwendung finden die neuen Verbindungen der Formel (1) vor allem als Farbstoffe zum Färben und Bedrucken von Textilmaterialien, Papier, Leder und zur Bereitung von Tinten.

Dienen die erfindungsgemässen Azofarbstoffe zum Färben und Bedrucken von Textilmaterialien, so kommen vor allem solche aus Baumwolle in Frage. Die neuen Farbstoffe haben ein gutes Ziehvermögen auf diese Textilmaterialien, einen guten Ausziehgrad und guten Aufbau. Man erhält rote Färbungen, welche gute Echtheiten, vor allem gute Nassechtheiten und Lichtechtheiten aufweisen.

Die bevorzugte Verwendung der erfindungsgemässen Farbstoffe der Formel (1) liegt in der Anwendung zum Färben und Bedrucken von Papier aller Arten, vor allem von gebleichtem und geleimtem ligninfreiem Papier.

Die erfindungsgemässen Farbstoffe ziehen sehr gut auf diese Substrate, wobei das Abwasser - auch bei tiefen Nuancen (bis über 1/l RT = Richttyptiefe) - praktisch farblos bleibt, was ein eminenter technischer und ökologischer Vorteil ist. Der gute Ausziehgrad ist auch für eine gute Reproduzierbarkeit der Nuance von Vorteil. Die Färbungen sind nassecht, d.h. sie zeigen keine Neigung zum Ausbluten, wenn gefärbtes Papier in nassem Zustand mit feuchtem weissem Papier in Berührung gebracht wird. Diese Eigenschaft ist besonders für sogenannte "Tissues" erwünscht, bei denen vorhersehbar ist, dass das gefärbte Papier in nassem Zustand (z.B. getränkt mit Wasser, Alkohol, Tensid-Lösung etc.) in Berührung mit anderen Flächen wie Textilien, Papier und dergleichen kommt, die gegen Verschmutzung geschützt werden müssen. Falls gewünscht, kann beim Färben von Papier mit den erfindungsgemässen Farbstoffen zusätzlich ein kationisches Fixiermittel eingesetzt werden.

Die roten Ausfärbungen sind brillant und haben sehr gute Echtheiten, vor allem Lichtechtheit.

Weiter dienen die Farbstoffe der Formel (1) zum Färben von Ledermaterialien nach den verschiedensten Applikationsverfahren, wie Sprühen, Bürsten und Tauchen und zur Bereitung von Tinten aller Art wie für Kugelschreiber und Drucktinten.

Aus der US-A-2,026,920 ist bereits ein Disazofarbstoff bekannt, der an der endständigen Diazokomponente durch Halogen substituiert sind und am Phenylureidorest durch Acetylamino.

Die folgenden Beispiele veranschaulichen die Erfindung, ohne sie darauf zu limitieren. Die Temperaturen sind in Grad Celsius angegeben, Teile (T) bedeuten Gewichtsteile und %-Angaben sind Gewichtsprozente.

Beispiel 1:

6,9 Teile des Phenylcarbamates der Formel

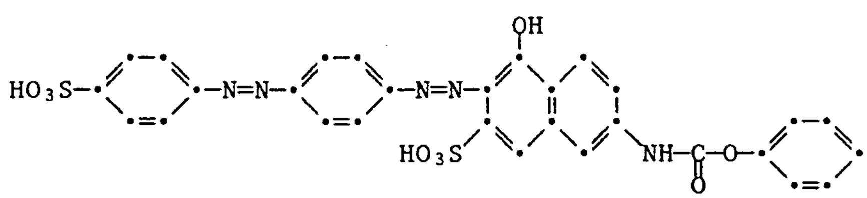

erhalten durch Acylierung von I-Säure mit Chlorameisensäurephenylester und Kupplung mit diazotierter 4-Amino-1,1'-azobenzol-4'-sulfonsäure, werden in 50 Teilen Wasser mit 2 Teilen Metanilsäure versetzt. Das Reaktionsgemisch wird mit Natronlauge auf pH 7,5 gestellt und bei 60° gerührt, bis die Dünnschichtchromatographie kein Ausgangsmaterial mehr zeigt. Der so erhaltene Farbstoff der Formel

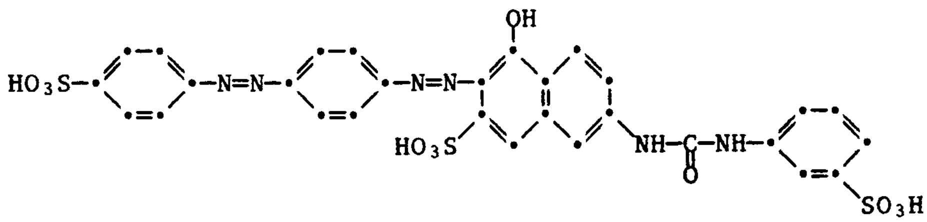

wird durch Aussalzen mit NaCl als Na-Salz isoliert. Es färbt Papier in brillanten blaustichig roten Tönen. Die färberischen Eigenschaften, wie Lichtechtheit, Ausblutechtheit und Ausziehvermögen auf Papier, sind ausgezeichnet. Der anfallende Presskuchen kann direkt zu flüssigen Präparationen verarbeitet werden.

Ersetzt man im obigen Beispiel die 6,9 Teile Phenylcarbamat durch entsprechende Teile des Ethyl-, Isobutyl- oder Benzylcarbamates und verfährt unter den gleichen Reaktionsbedingungen, so erhält man den gleichen Farbstoff mit gleich guten Eigenschaften.

Beispiel 2:

40 Teile der Harnstoffverbindung der Formel

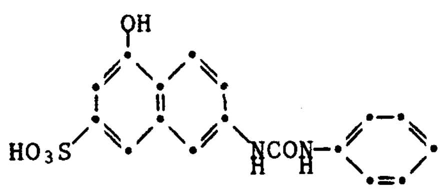

erhalten durch Acylierung von I-Säure mit Phenylisocyanat in bekannte Weise, werden in 500 Teilen Wasser vorgelegt und bei 0 - 5° mit 27 Teilen diazotierter 4-Amino-1,1'-azobenzol-4'-sulfonsäure gekuppelt. Der pH-Wert wird mit 2N Natronlauge zwischen 6 und 7 gehalten. Anschliessend wird der Farbstoff der Formel

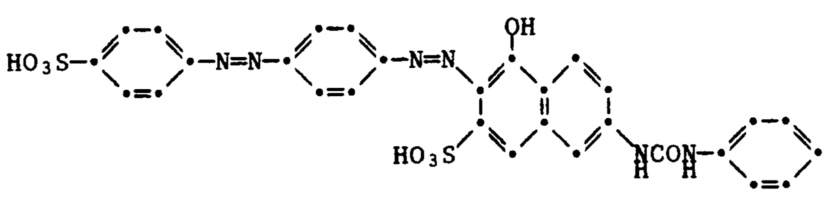

mit NaCl ausgesalzen. Er färbt Papier in ähnlichen Tönen wie der im Beispiel 1 beschriebene Farbstoff.

Beispiele 3 - 59:

Verfährt man analog der angegebenen Arbeitsweise, so werden die aus der folgenden Tabelle ersichtlichen weiteren Farbstoffe erhalten.

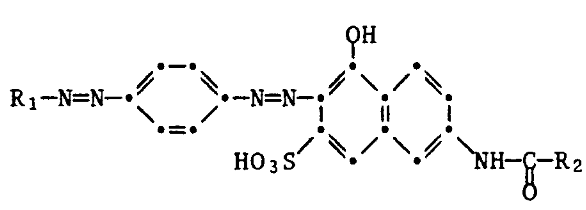

Tabelle

| Bsp. | $R_1$ | $R_2$ | Nuance auf Papier |
|---|---|---|---|
| 3 | 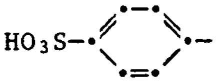 | 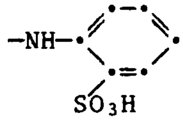 | blaustichig rot |
| 4 | 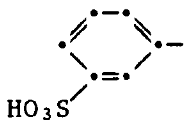 | 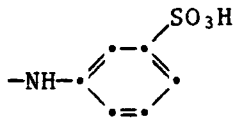 | blaustichig rot |
| 5 | 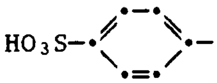 | 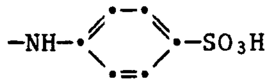 | blaustichig rot |
| 6 | 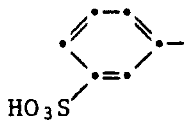 | 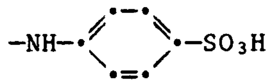 | blaustichig rot |
| 7 | 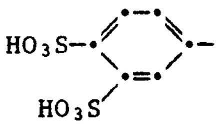 | 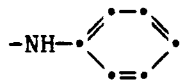 | blaustichig rot |
| 8 | 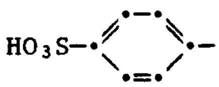 | 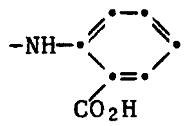 | blaustichig rot |

Tabelle (Fortsetzung)

| Bsp. | $R_1$ | $R_2$ | Nuance auf Papier |
|---|---|---|---|
| 9 | 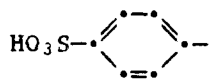 | 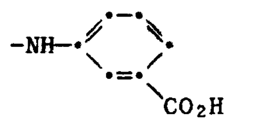 | blaustichig rot |
| 10 | 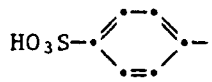 | 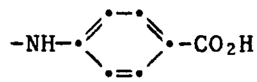 | blaustichig rot |
| 11 | 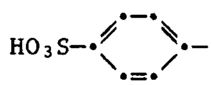 | 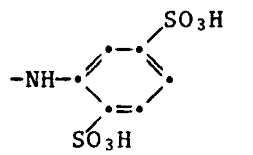 | blaustichig rot |
| 12 | 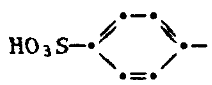 | 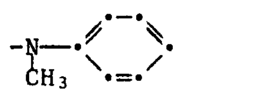 | blaustichig rot |
| 13 | 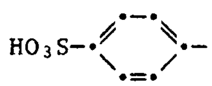 | 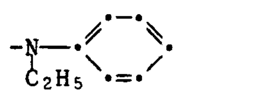 | blaustichig rot |
| 14 | 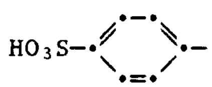 | 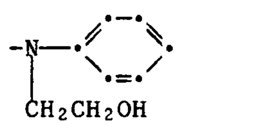 | blaustichig rot |
| 15 | 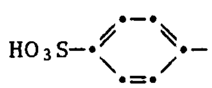 | 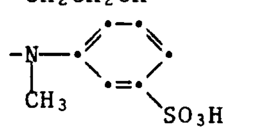 | blaustichig rot |
| 16 | 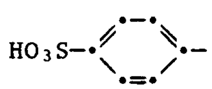 | 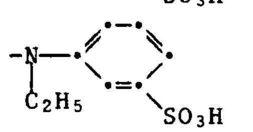 | blaustichig rot |
| 17 | 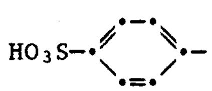 | 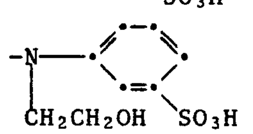 | blaustichig rot |
| 18 | 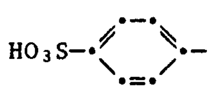 | 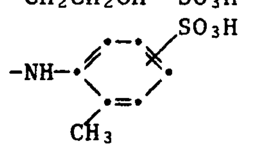 | blaustichig rot |
| 19 | 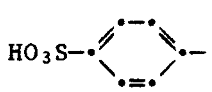 | 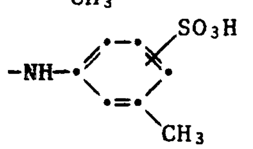 | blaustichig rot |
| 20 | 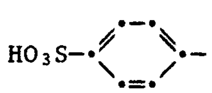 | 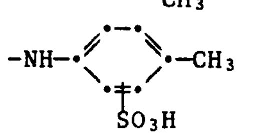 | blaustichig rot |

Tabelle (Fortsetzung)

| Bsp. | $R_1$ | $R_2$ | Nuance auf Papier |
|---|---|---|---|
| 21 | 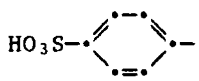 | 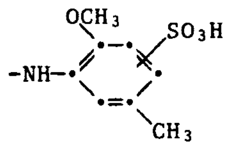 | blaustichig rot |
| 22 | 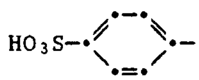 | 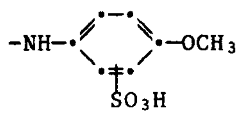 | blaustichig rot |
| 23 | 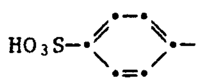 | 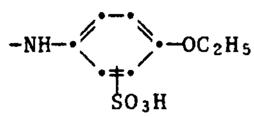 | blaustichig rot |
| 24 | 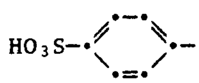 | 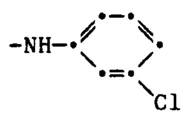 | blaustichig rot |
| 25 | 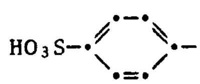 | 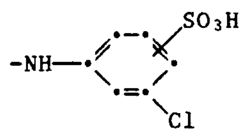 | blaustichig rot |
| 26 | 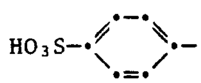 | 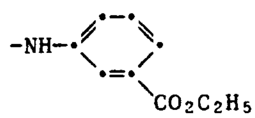 | blaustichig rot |
| 27 | 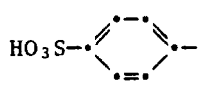 | 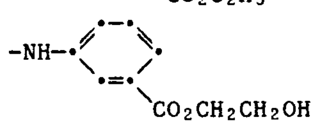 | blaustichig rot |
| 28 | 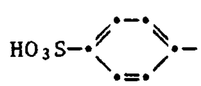 | 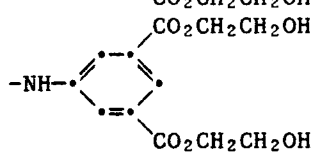 | blaustichig rot |
| 29 | 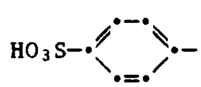 | 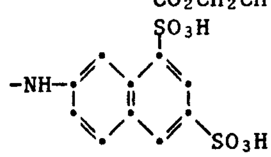 | blaustichig rot |
| 30 | 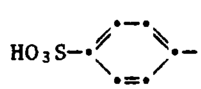 | 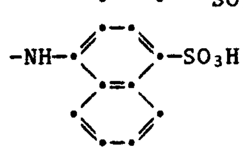 | blaustichig rot |
| 31 | 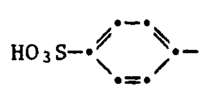 | 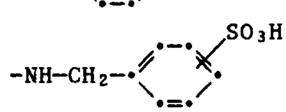 | rot |

Tabelle (Fortsetzung)

| Bsp. | $R_1$ | $R_2$ | Nuance auf Papier |
|---|---|---|---|
| 32 | 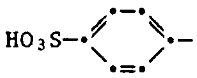 | 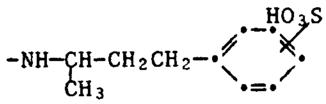 | rot |
| 33 | 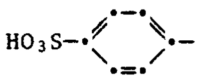 | $-NH-CH_2CH_2OH$ | rot |
| 34 | 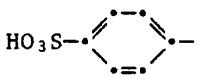 | 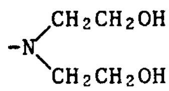 | rot |
| 35 | 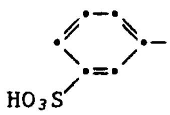 | 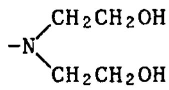 | rot |
| 36 | 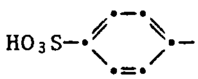 | 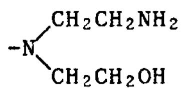 | rot |
| 37 | 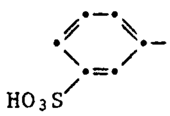 | 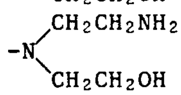 | rot |
| 38 | 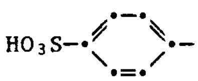 | 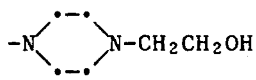 | rot |
| 39 | 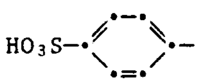 | 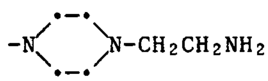 | rot |
| 40 | 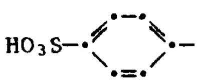 | $-NH-CH_2CH_2CH_2N(CH_3)_2$ | rot |
| 41 | 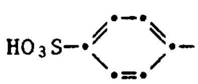 | $-NH-CH_2CH_2CH_2N(C_2H_5)_2$ | rot |
| 42 | 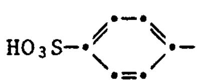 | 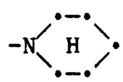 | rot |
| 43 | 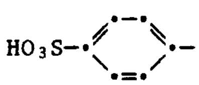 | $-NH-CH_2CH_2OCH_2CH_2OH$ | rot |
| 44 | 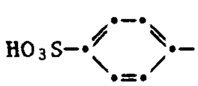 | $-NH-CH_3$ | rot |
| 45 | 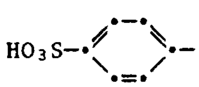 | $-NH-C_2H_5$ | rot |
| 46 | 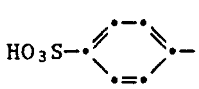 | $-NH-C_4H_9$ | rot |

Tabelle (Fortsetzung)

| Bsp. | $R_1$ | $R_2$ | Nuance auf Papier |
|---|---|---|---|
| 47 | 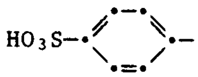 | $-N(CH_3)_2$ | rot |
| 48 | 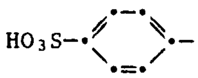 | $-N(C_2H_5)_2$ | rot |
| 49 | 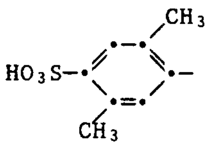 | 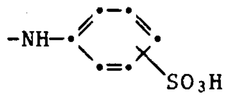 | blaustichig rot |
| 50 | 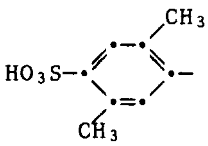 | 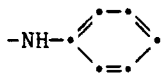 | blaustichig rot |
| 51 | 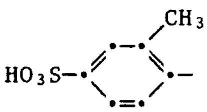 | 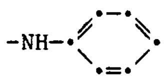 | blaustichig rot |
| 52 | 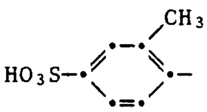 | 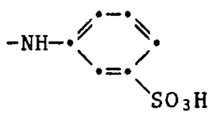 | blaustichig rot |
| 53 | 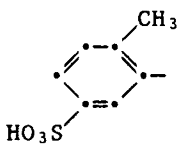 | 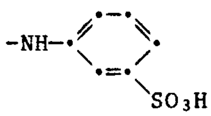 | blaustichig rot |
| 54 | 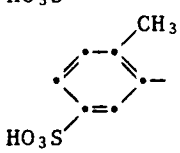 | 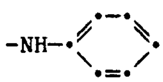 | blaustichig rot |
| 55 | 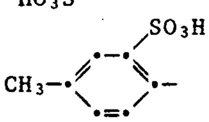 | 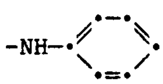 | blaustichig rot |
| 56 | 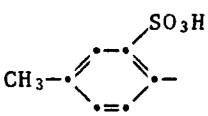 | 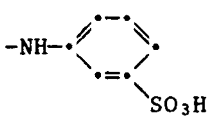 | blaustichig rot |

Tabelle (Fortsetzung)

| Bsp. | $R_1$ | $R_2$ | Nuance auf Papier |
|---|---|---|---|
| 57 | 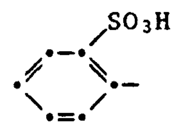 | 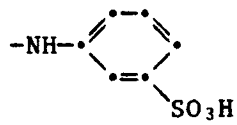 | blaustichig rot |
| 58 | 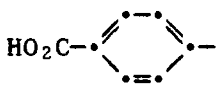 | 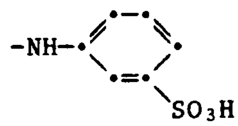 | blaustichig rot |
| 59 | 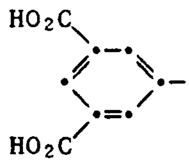 | 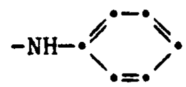 | blaustichig rot |

Beispiel 60:

200 Teile des Farbstoffes aus Beispiel 2 werden in Form der freien salzarmen Farbstoffsäure in 500 Teilen Wasser homogen verrührt und durch Zugabe von 58 Teilen Diethanolamin und 100 Teilen Harnstoff bei 40° gelöst. Die Lösung wird unter Zusatz eines Filterhilfsmittels klärfiltriert. Das Filtrat lässt man auf Raumtemperatur abkühlen und stellt es mit Wasser auf 1000 Teile ein. Man erhält eine stabile Farbstofflösung, welche eine flüssige Handelsform darstellt.

Anstelle von Diethanolamin können auch Monoethanolamin, Triethanolamin, 2-(2-Aminoethoxy)-ethanol, Polyglykolamine, wie sie in der DE-A-2.061.760 beschrieben sind, Ammoniak, Tetramethylammoniumhydroxid, Lithiumhydroxid oder Lithiumcarbonat eingesetzt werden.

Beispiel 61:

In einem Holländer werden 70 Teile chemisch gebleichte Sulfitzellulose (aus Nadelholz) und 30 Teile chemisch gebleichte Sulfitzellulose (aus Birkenholz) in 2000 Teilen Wasser gemahlen. Zu dieser Masse gibt man 2,5 Teile der im Beispiel 60 beschriebenen Farbstofflösung. Nach 20 Minuten Mischzeit wird aus dieser Masse Papier hergestellt. Das auf diese Weise erhaltene saugfähige Papier ist rot gefärbt. Das Abwasser ist praktisch farblos.

Beispiel 62:

0,5 Teile des Farbstoffpulvers aus Beispiel 1 werden in 100 Teilen heissem Wasser gelöst und die Lösung auf Raumtemperatur abgekühlt. Diese Lösung gibt man zu 100 Teilen chemisch gebleichter Sulfitzellulose, die mit 2000 Teilen Wasser in einem Holländer gemahlen wurden. Nach 15 Minuten Durchmischung wird auf übliche Art mit Harzleim und Aluminiumsulfat geleimt. Papier, das aus diesem Stoff hergestellt wird, besitzt eine rote Nuance mit guten Nassechtheiten.

Beispiel 63:

69 g des gemäss Beispiel 2 erhaltenen Farbstoff-Na-Salzes werden in 600 ml Wasser angerührt und bei 50° mit 160 ml Nitrobenzol, 40,7 g Tributylamin und 22 ml HCl 32 % versetzt. Man verrührt bei 70°, bis der Farbstoff vollständig in die organische Phase übergegangen ist. Die wässrige Phase wird verworfen und die organische Phase wird zweimal mit je 600 ml heissem Wasser gewaschen. Dann werden 250 ml Wassser und 39,7 g Triethanolamin zugegeben und das Gemisch bei 85° verrührt, bis der Farbstoff vollständig in die wässrige Phase übergegangen ist. Die wässrige Phase wird durch Wasserdampfdestillation von Spuren Nitrobenzol und Tributylamin befreit. Man erhält eine stabile Farbstofflösung. Die organische Phase wird tel quel für weitere Extraktionen eingesetzt.

## Patentansprüche

**1.** Disazofarbstoffe der Formel

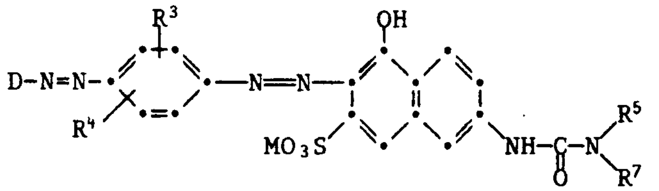

(1)

worin D einen Rest der Formel

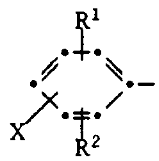

(a)

oder

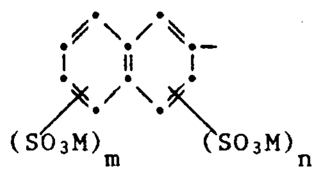

(b)

| | |
|---|---|
| X | -COOM oder $-SO_3M$, |
| $R^1$ und $R^2$ | jeweils unabhängig voneinander Wasserstoff, Alkyl oder Alkoxy mit jeweils 1 bis 4 C-Atomen in den Alkylresten bedeuten, |
| m | für 0, 1 oder 2 |
| n | für 0 oder 1 und |
| m + n | für 1 oder 2 stehen, wobei zwei sich am gleichen Ring befindliche Sulfogruppen nicht orthoständig zueinander sind, |
| $R^3$ | Wasserstoff, Alkyl oder Alkoxy mit jeweils 1 bis 4 C-Atomen in den Alkylresten, |
| $R^4$ | Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind, |
| $R^5$ | Wasserstoff, $C_1$-$C_4$-Alkyl oder einen Rest |

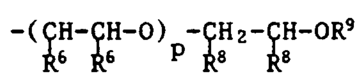

| | |
|---|---|
| $R^6$ und $R^8$ | unabhängig voneinander jeweils Wasserstoff oder Alkyl mit 1 oder 2 C-Atomen bedeuten, wobei jedoch ein Rest $R^6$ und ein Rest $R^8$ Wasserstoff sein müssen, |
| $R^7$ | Wasserstoff, $C_5$-$C_7$-Cycloalkyl, $C_1$-$C_6$-Alkyl, welches unsubstituiert ist oder durch Amino, $C_1$-$C_4$-Alkylamino oder Di-$C_1$-$C_4$-Alkylamino substituiert ist, einen Rest der Formel |

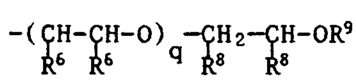

| | |
|---|---|
| | oder einen Rest der Formel -A-Y, |
| $R^9$ | Wasserstoff oder $C_1$-$C_4$-Alkyl, |
| A | eine direkte Bindung oder einen geradkettigen oder verzweigten $C_1$-$C_6$-Alkylenrest, |
| Y | Phenyl oder Naphthyl, unsubstituiert oder substituiert durch Sulfo, Carboxy, Halogen, $C_1$-$C_4$-Alkyl, $C_1$-$C_4$-Alkoxy, $C_1$-$C_4$-Alkyloxycarbonyl oder Hydroxy-$C_1$-$C_4$-Alkyloxycar- |

bonyl oder

$R^5$ und $R^7$ zusammen mit dem sie verbindenden N-Atom einen Pyrrolidin-, Piperidin-, Morpholin- oder einen Piperazinrest, der gegebenenfalls am nicht mit dem Triazinring verbundenen N-Atom durch $C_1$-$C_4$-Alkyl, Hydroxy-$C_1$-$C_4$-Alkyl oder Amino-$C_1$-$C_4$-Alkyl substituiert ist,

p und q jeweils unabhängig voneinander 0 oder eine ganze Zahl bis maximal 3 und

M Wasserstoff oder ein Aequivalent eines farblosen Kations bedeuten.

**2.** Farbstoffe gemäss Anspruch 1, dadurch gekennzeichnet, dass D einen Rest der Formel (a) bedeutet.

**3.** Farbstoffe gemäss Anspruch 2, dadurch gekennzeichnet, dass $R^1$ Wasserstoff, Methyl, Methoxy oder Ethoxy bedeutet.

**4.** Farbstoffe gemäss Anspruch 3, dadurch gekennzeichnet, dass $R^1$ Wasserstoff, Methyl oder Methoxy bedeutet.

**5.** Farbstoffe gemäss einem der Ansprüche 1-4, dadurch gekennzeichnet, dass $R^2$ Wasserstoff oder Methyl bedeutet.

**6.** Farbstoffe gemäss einem der Ansprüche 1-5, dadurch gekennzeichnet, dass X Sulfo bedeutet.

**7.** Farbstoffe gemäss einem der Ansprüche 1-6, dadurch gekennzeichnet, dass $R^3$ und $R^4$ unabhängig voneinander je Wasserstoff, Methyl, Methoxy oder Ethoxy, vor allem Wasserstoff bedeuten.

**8.** Farbstoffe gemäss einem der Ansprüche 1-7, dadurch gekennzeichnet, dass $R^5$ Methyl, Ethyl, einen Rest $-CH_2-CH_2-OH$ oder Wasserstoff bedeutet.

**9.** Farbstoffe gemäss einem der Ansprüche 1 - 8, dadurch gekennzeichnet, dass $R^7$ Methyl, Ethyl, Hydroxyethyl, Aminoethyl, welches gegebenenfalls am N-Atom durch $C_1$-$C_4$-Alkyl mono- oder dialkyliert ist, eine Gruppe der Formel

$$-(CH_2-CH_2-O)_p-CH_2-CH_2-OH,$$

wobei p O oder 1 ist, oder eine Gruppe -A-Y, wobei A und Y die unter der Formel (1) angeführten Bedeutungen besitzen, bedeutet.

**10.** Farbstoffe gemäss Anspruch 9, dadurch gekennzeichnet, dass $R^7$ einen Rest -A-Y bedeutet, wobei A Methylen, Ethylen oder eine direkte Bindung und Y einen Naphthylrest, der eine oder zwei Sulfogruppen trägt, oder einen unsubstituierten oder durch Sulfo, Carboxy, Chlor, Methyl, Methoxy, Ethoxy, Ethoxycarbonyl oder Hydroxyethoxycarbonyl substituierten Phenylrest darstellt.

**11.** Farbstoffe gemäss Anspruch 10, dadurch gekennzeichnet, dass Y einen unsubstituierten oder durch Sulfo oder Carboxy substituierten Phenylrest bedeutet.

**12.** Farbstoffe gemäss einem der Ansprüche 1 - 11, dadurch gekennzeichnet, dass M $Na^{\oplus}$, $Li^{\oplus}$ oder protoniertes $C_4$-$C_6$-Alkanolamin bedeutet.

**13.** Farbstoffe gemäss Anspruch 1 der Formel

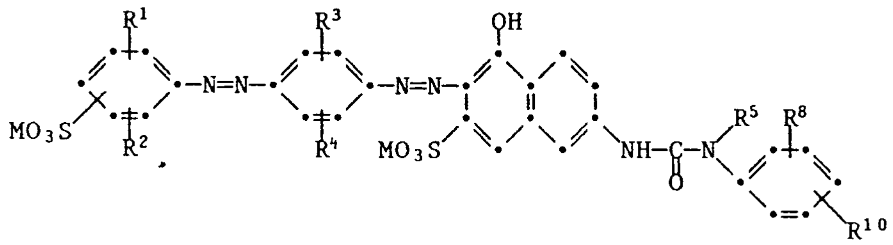

(2)

worin

| | |
|---|---|
| $R^1$ und $R^2$ | jeweils unabhängig voneinander Wasserstoff, Alkyl oder Alkoxy mit jeweils 1 bis 4 C-Atomen in den Alkylresten, |
| $R^3$ | Wasserstoff, Alkyl oder Alkoxy mit jeweils 1 bis 4 C-Atomen in den Alkylresten, |
| $R^4$ | Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind, |
| $R^5$ | Wasserstoff, Methyl, Ethyl oder einen Rest |

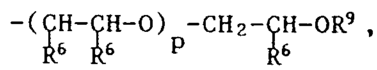

| | |
|---|---|
| $R^6$ | Wasserstoff oder Alkyl mit 1 oder 2 C-Atomen, |
| $R^8$ | Wasserstoff, |
| $R^9$ | Wasserstoff oder $C_1$-$C_4$-Alkyl, |
| $R^{10}$ | Wasserstoff, Sulfo, Carboxy, Chlor, Methyl, Methoxy, Ethoxy, Ethylcarbonylamino, Ethoxycarbonyl oder Hydroxyethoxycarbonyl, |
| p | 0 oder 1 und |
| M | Wasserstoff oder ein Aequivalent eines farblosen Kations bedeuten. |

**14.** Farbstoffe gemäss Anspruch 13, dadurch gekennzeichnet, dass $R^1$ Wasserstoff, Methyl oder Methoxy, $R^2$ Wasserstoff oder Methyl, $R^3$ und $R^4$ jeweils unabhängig voneinander Wasserstoff, Methyl, Methoxy oder Ethoxy, $R^5$ Wasserstoff oder Hydroxyethyl, $R^8$ und $R^9$ je Wasserstoff, $R^{10}$ Wasserstoff, Sulfo oder Carboxy und M $Na^{\oplus}$, $Li^{\oplus}$ oder protoniertes $C_4$-$C_6$-Alkanolamin bedeuten.

**15.** Verfahren zur Herstellung von Disazofarbstoffen der Formel (1) gemäss Anspruch 1, dadurch gekennzeichnet, dass man eine Verbindung der Formel

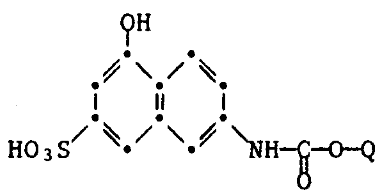

(3)

worin Q ein gegebenenfalls substituierter Phenyl- oder Alkylrest ist, mit einem Amin der Formel

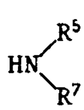

(4)

umsetzt, wobei man entweder die Verbindung der Formel (3) oder das Umsetzungsprodukt aus der

Verbindung (3) und dem Amin der Formel (4) mit einem diazotierten Amin der Formel

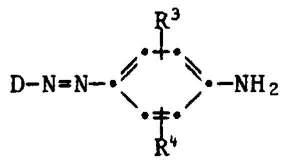

(5)

kuppelt, wobei $R^5$, $R^7$, D, $R^3$ und $R^4$ die unter der Formel (1) angegebene Bedeutung aufweisen.

**16.** Verfahren gemäss Anspruch 15, dadurch gekennzeichnet, dass man zunächst eine Verbindung der Formel (3) mit einem diazotierten Amin der Formel (5) kuppelt und die erhaltene Disazoverbindung anschliessend mit einem Amin der Formel (4) umsetzt, wobei diese Reaktionen ohne Isolierung der Zwischenstufen durchgeführt werden.

**17.** Verfahren zur Herstellung von Disazofarbstoffen der Formel (1) gemäss Anspruch 1, dadurch gekennzeichnet, dass man I-Säure (7-Amino-4-hydroxy-2-naphthalinsulfonsäure) mit einem Isocyanat der Formel

OCN-A-Y′ (6)

zu einer Verbindung der Formel

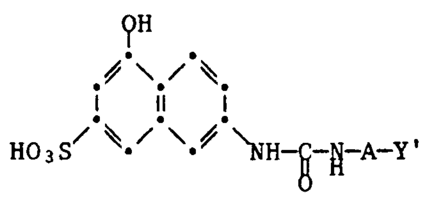

(7)

umsetzt und anschliessend mit einem diazotierten Amin der Formel

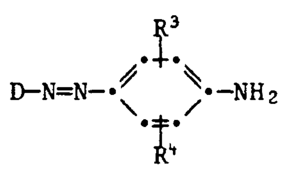

(5)

kuppelt, wobei Y' Phenyl oder Naphthyl bedeutet, welches unsubstituiert oder durch Sulfo, Halogen, $C_1$-$C_4$-Alkyl, $C_1$-$C_4$-Alkoxy oder $C_1$-$C_4$-Alkoxycarbonyl substituiert ist, und D, $R^3$ und $R^4$ die unter der Formel (1) angegebene Bedeutung aufweisen, oder dass man zunächst I-Säure mit einem diazotierten Amin der Formel (5) kuppelt, und das Reaktionsprodukt dann mit einem Isocyanat der Formel (6) acyliert.

**18.** Verwendung der Verbindungen der Formel (1) gemäss Anspruch 1 als Farbstoffe zum Färben und Bedrucken von Textilmaterialien, Papier, Leder und zur Bereitung von Tinten.

**19.** Verwendung gemäss Anspruch 18 zum Färben und Bedrucken von Papier aller Arten.

**20.** Das mit Farbstoffen der Formel (1) gemäss Anspruch 1 gefärbte Papier.

## Claims

**1.** A disazo dye of formula

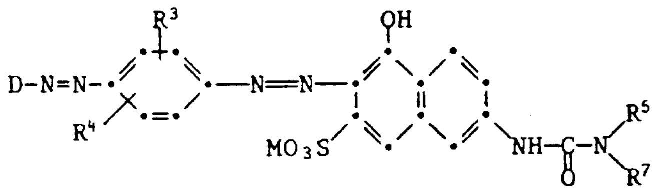

(1)

in which D is a radical of formula

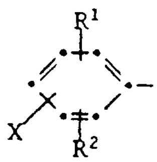

(a)

or

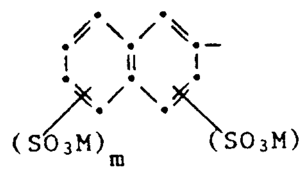

(b)

| | |
|---|---|
| X | is -COOM OR $-SO_3M$ |
| $R^1$ and $R^2$ | are each independently of the other hydrogen, alkyl or alkoxy, each having 1 to 4 carbon atoms in the alkyl radicals, |
| m | is 0, 1 or 2, |
| n | is 0 or 1, and |
| m + n | are 1 or 2, with the proviso that two sulfo groups present in the same ring may not be in ortho-position to each other, |
| $R^3$ | is hydrogen, alkyl or alkoxy, each having 1 to 4 carbon atoms in the alkyl radicals, |
| $R^4$ | is hydrogen or alkyl having 1 to 4 carbon atoms, with the proviso that the two radicals $R^3$ and $R^4$ are in para-position to each other if they have a meaning different from hydrogen, |
| $R^5$ | is hydrogen, $C_1$-$C_4$alkyl or a radical |

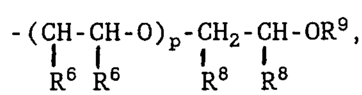

| | |
|---|---|
| $R^6$ and $R^8$ | are each independently of the other hydrogen or alkyl having 1 or 2 carbon atoms, with the proviso that one radical $R^6$ and one radical $R^8$ must be hydrogen, |
| $R^7$ | is hydrogen, $C_5$-$C_7$cycloalkyl, $C_1$-$C_6$alkyl which is unsubstituted or sub-stituted by amino, $C_1$-$C_4$alkylamino or di-$C_1$-$C_4$alkylamino, or is a radical of formula |

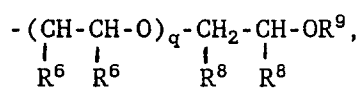

| | |
|---|---|
| | or a radical of formula -A-Y, |
| $R^9$ | is hydrogen or $C_1$-$C_4$alkyl, |
| A | is a direct bond or a straight-chain or branched $C_1$-$C_6$alkylene radical, |
| Y | is phenyl or naphthyl, each unsubstituted or substituted by sulfo, carboxyl, halogen, $C_1$-$C_4$alkyl, $C_1$-$C_4$alkoxy, $C_1$-$C_4$alkoxycarbonyl or hydroxy-$C_1$-$C_4$alkoxycarbonyl, or |
| $R^5$ and $R^7$ | , together with the nitrogen atom linking them, are a pyrrolidine, piperidine or morpholine radical or a piperazine radical which is unsubstituted or substituted by $C_1$- |

$C_4$alkyl, hydroxy-$C_1$-$C_4$alkyl or amino-$C_1$-$C_4$alkyl at the nitrogen atom which is not attached to the triazine ring,

p and q are each independently of the other 0 or a whole number not greater than 3, and

M is hydrogen or an equivalent of a colourless cation.

**2.** A dye according to claim 1, wherein D is a radical of formula (a).

**3.** A dye according to claim 2, wherein $R^1$ is hydrogen, methyl, methoxy or ethoxy.

**4.** A dye according to claim 3, wherein $R^1$ is hydrogen, methyl or methoxy.

**5.** A dye according to any one of claims 1 to 4, wherein $R^2$ is hydrogen or methyl.

**6.** A dye according to any one of claims 1 to 5, wherein X is sulfo.

**7.** A dye according to any one of claims 1 to 6, wherein $R^3$ and $R^4$ are each independently of the other hydrogen, methyl, methoxy or ethoxy and are especially hydrogen.

**8.** A dye according to any one of claims 1 to 7, wherein $R^5$ is methyl, ethyl, a radical $-CH_2-CH_2-OH$ or hydrogen.

**9.** A dye according to any one of claims 1 to 8, wherein $R^7$ is methyl, ethyl, hydroxyethyl, aminoethyl, each unsubstituted or mono- or dialkylated at the nitrogen atom by $C_1$-$C_4$alkyl, or a group of formula $-(CH_2-CH_2-O)_p-CH_2-CH_2-OH$, where p is 0 or 1, or a group -A-Y, in which A and Y are as defined for formula (1).

**10.** A dye according to claim 9, wherein $R^7$ is a radical -A-Y, where A is methylene, ethylene or a direct bond and Y is a naphthyl radical which carries one or two sulfo groups, or a phenyl radical which is unsubstituted or substituted by sulfo, carboxyl, chlorine, methyl, methoxy, ethoxy, ethoxycarbonyl or hydroxyethoxycarbonyl.

**11.** A dye according to claim 10, wherein Y is a phenyl radical which is unsubstituted or substituted by sulfo or carboxyl.

**12.** A dye according to any one of claims 1 to 11, wherein M is $Na^{\oplus}$, $Li^{\oplus}$ or protonated $C_4$-$C_6$alkanolamine.

**13.** A dye according to claim 1 of formula

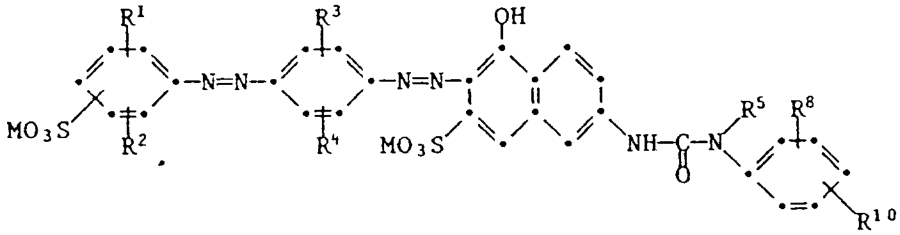

(2)

in which

$R^1$ and $R^2$ are each independently of the other hydrogen, alkyl or alkoxy, each having 1 to 4 carbon atoms in the alkyl radicals,

$R^3$ is hydrogen, alkyl or alkoxy, each having 1 to 4 carbon atoms in the alkyl radicals,

$R^4$ is hydrogen or alkyl having 1 to 4 carbon atoms with the proviso that the two radicals $R^3$ and $R^4$ are in the para-position to each other if they have a meaning different from hydrogen,

$R^5$ is hydrogen, methyl, ethyl or a radical

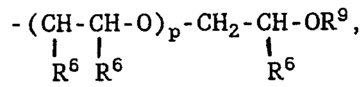

| | |
|---|---|
| $R^6$ | is hydrogen or alkyl having 1 or 2 carbon atoms, |
| $R^8$ | is hydrogen, |
| $R^9$ | is hydrogen or $C_1$-$C_4$alkyl, |
| $R^{10}$ | is hydrogen, sulfo, carboxyl, chlorine, methyl, methoxy, ethoxy, ethylcarbonylamino, ethoxycarbonyl or hydroxyethoxycarbonyl, |
| p | is 0 or 1, and |
| M | is hydrogen or an equivalent of a colourless cation. |

**14.** A dye according to claim 13, wherein $R^1$ is hydrogen, methyl or methoxy, $R^2$ is hydrogen or methyl, $R^3$ and $R^4$ are each independently of the other hydrogen, methyl, methoxy or ethoxy, $R^5$ is hydrogen or hydroxyethyl, $R^8$ and $R^9$ are each hydrogen, $R^{10}$ is hydrogen, sulfo or carboxyl and M is $Na^{\oplus}$, $Li^{\oplus}$ or protonated $C_4$-$C_6$alkanolamine.

**15.** A process for the preparation of a disazo dye of formula (1) according to claim 1, which comprises reacting a compound of formula

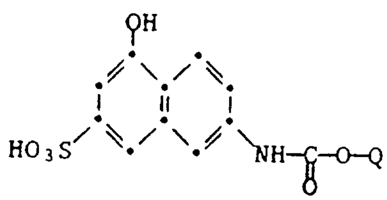

(3)

in which Q is an unsubstituted or substituted phenyl or alkyl radical with an amine of formula

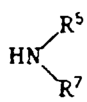

(4)

with either the compound of formula (3) or the reaction product of the compound (3) and the amine of formula (4) being coupled with a diazotized amine of formula

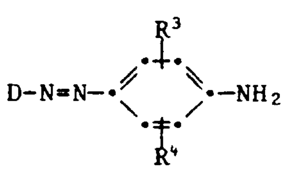

(5)

where $R^5$, $R^7$, D, $R^3$ and $R^4$ are as defined for formula (1).

**16.** A process according to claim 15, which comprises first coupling a compound of formula (3) with a diazotized amine of formula (5) and subsequently reacting the resultant disazo compound with an amine of formula (4), and carrying out said reactions without isolation of the intermediates.

**17.** A process for the preparation of a disazo dye of formula (1) according to claim 1, which comprises reacting I-acid (7-amino-4-hydroxy-2-naphthalenesulfonic acid) with an isocyanate of formula

OCN-A-Y' (6)

to give a compound of formula

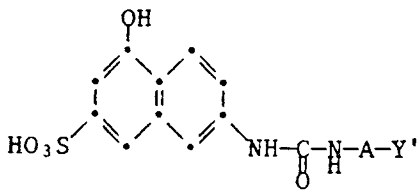

(7)

and subsequently coupling said compound of formula (7) with a diazotized amine of formula

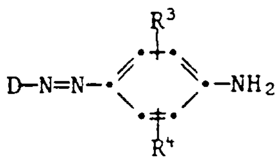

(5)

where Y' is phenyl or naphthyl, each unsubstituted or substituted by sulfo, halogen, $C_1$-$C_4$alkyl, $C_1$-$C_4$alkoxy or $C_1$-$C_4$alkoxycarbonyl, and D, $R^3$ and $R^4$ are as defined for formula (1), or which comprises first coupling I-acid with a diazotized amine of formula (5) and then acylating the reaction product with an isocyanate of formula (6).

**18.** Use of a compound of formula (1) according to claim 1 as a dye for dyeing and printing textile materials, paper, leather and for the preparation of inks.

**19.** Use according to claim 18 for dyeing and printing paper of all kinds.

**20.** Paper dyed with a dye of formula (1) according to claim 1.

## Revendications

**1.** Colorants disazoïques de formule :

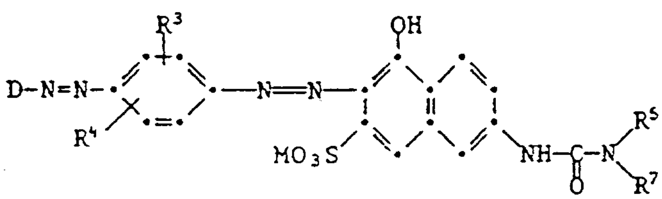

(1)

dans laquelle D représente un reste de formule :

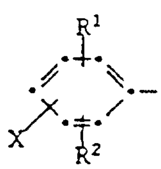

ou

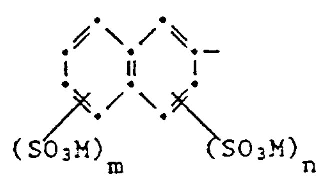

(a) (b)

| | |
|---|---|
| X | représente -COOM ou $-SO_3M$, |
| $R^1$ et $R^2$ | représentent chacun, indépendamment l'un de l'autre, un atome d'hydrogène ou un groupe alkyle ou alcoxy comportant dans chaque cas de 1 à 4 atomes de carbone, |
| m | vaut 0, 1 ou 2, |
| n | vaut 0 ou 1, et |

m + n vaut 1 ou 2, mais deux groupes sulfo placés sur le même noyau ne se trouvant pas en ortho l'un de l'autre,

$R^3$ représente un atome d'hydrogène ou un groupe alkyle ou alcoxy comportant dans chaque cas de 1 à 4 atomes de carbone,

$R^4$ représente un atome d'hydrogène ou un groupe alkyle comportant de 1 à 4 atomes de carbone, les deux groupes représentés par $R^3$ et $R^4$, lorsque ces deux symboles désignent autre chose qu'un atome d'hydrogène, se trouvant en para l'un de l'autre,

$R^5$ représente un atome d'hydrogène, un groupe alkyle en $C_1$-$C_4$ ou un reste

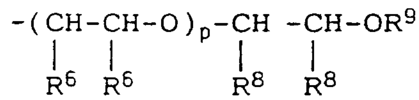

$R^6$ et $R^8$ représentent chacun, indépendamment l'un de l'autre, un atome d'hydrogène ou un groupe alkyle comportant 1 ou 2 atomes de carbone, mais l'un des symboles $R^6$ et l'un des symboles $R^8$ devant représenter un atome d'hydrogène,

$R^7$ représente un atome d'hydrogène, un groupe cycloalkyle en $C_5$-$C_7$, un groupe alkyle en $C_1$-$C_6$, portant ou non un substituant amino, (alkyl en $C_1$-$C_4$)-amino ou di-(alkyl en $C_1$-$C_4$)-amino, un groupe de formule

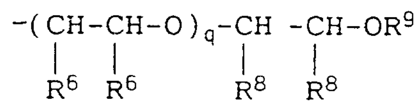

ou un groupe de formule -A-Y,

$R^9$ représente un atome d'hydrogène ou un groupe alkyle en $C_1$-$C_4$,

A représente une liaison directe ou un groupe alkylène en $C_1$-$C_6$ à chaîne droite ou ramifiée,

Y représente un groupe phényle ou naphtyle, portant ou non des substituants sulfo, carboxy, halogéno, alkyle en $C_1$-$C_4$, alcoxy en $C_1$-$C_4$, (alkyl en $C_1$-$C_4$)-oxycarbonyle ou hydroxy-(alkyl en $C_1$-$C_4$)-oxycarbonyle, ou bien

$R^5$ et $R^7$ , conjointement avec l'atome d'azote qui les relie, constituent un reste de pyrrolidine, de pipéridine, de morpholine ou de pipérazine, ce dernier portant éventuellement, sur l'atome d'azote non lié au groupe carbonyle, un substituant alkyle en $C_1$-$C_4$, hydroxyalkyle en $C_1$-$C_4$ ou aminoalkyle en $C_1$-$C_4$,

p et q valent chacun, indépendamment l'un de l'autre, 0 ou un nombre entier d'au plus 3, et

M représente un atome d'hydrogène ou un équivalent d'un cation incolore.

**2.** Colorants conformes à la revendication 1, caractérisés en ce que D représente un reste de formule (a).

**3.** Colorants conformes à la revendication 2, caractérisés en ce que $R^1$ représente un atome d'hydrogène ou un groupe méthyle, méthoxy ou éthoxy.

**4.** Colorants conformes à la revendication 3, caractérisés en ce que $R^1$ représente un atome d'hydrogène ou un groupe méthyle ou méthoxy.

**5.** Colorants conformes à l'une des revendications 1 à 4, caractérisés en ce que $R^2$ représente un atome d'hydrogène ou un groupe méthyle.

**6.** Colorants conformes à l'une des revendications 1 à 5, caractérisés en ce que X représente un groupe sulfo.

**7.** Colorants conformes à l'une des revendications 1 à 6, caractérisés en ce que $R^3$ et $R^4$ représentent chacun, indépendamment l'un de l'autre, un atome d'hydrogène ou un groupe méthyle, méthoxy ou éthoxy, et surtout un atome d'hydrogène.

**8.** Colorants conformes à l'une des revendications 1 à 7, caractérisés en ce que $R^5$ représente un groupe méthyle ou éthyle, un reste $-CH_2-CH_2-OH$ ou un atome d'hydrogène.

**9.** Colorants conformes à l'une des revendications 1 à 8, caractérisés en ce que $R^7$ représente un groupe méthyle, éthyle, hydroxyéthyle, ou aminoéthyle dont l'atome d'azote porte éventuellement un ou deux substituants alkyle en $C_1-C_4$, ou un groupe de formule $-(CH_2-CH_2-O)_p-CH_2-CH_2-OH$, où p vaut 0 ou 1, ou encore un groupe -A-Y, où A et Y ont les significations indiquées à propos de la formule (1).

**10.** Colorants conformes à la revendication 9, caractérisés en ce que $R^7$ représente un groupe -A-Y, où A représente une liaison directe ou un groupe méthylène ou éthylène, et Y représente un reste naphtyle portant un ou deux groupes sulfo, ou un reste phényle portant ou non des substituants sulfo, carboxy, chloro, méthyle, méthoxy, éthoxy, éthoxycarbonyle ou hydroxyéthoxycarbonyle.

**11.** Colorants conformes à la revendication 10, caractérisés en ce que Y représente un reste phényle non substitué ou substitué par des groupes sulfo ou carboxy.

**12.** Colorants conformes à l'une des revendications 1 à 11, caractérisés en ce que M représente $Na^+$, $Li^+$ ou une alcanolamine en $C_4-C_6$ protonée.

**13.** Colorants conformes à la revendication 1, de formule :

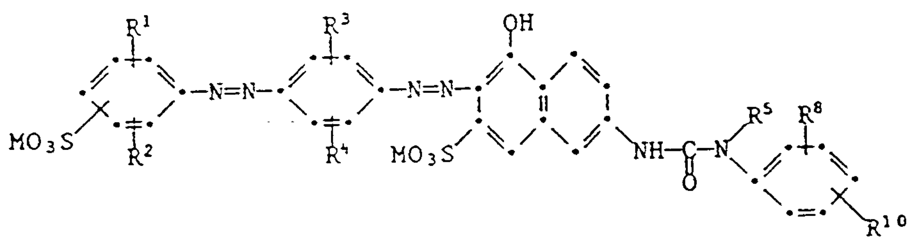

(2)

dans laquelle

| | |
|---|---|
| $R^1$ et $R^2$ | représentent chacun, indépendamment l'un de l'autre, un atome d'hydrogène ou un groupe alkyle ou alcoxy comportant dans chaque cas de 1 à 4 atomes de carbone, |
| $R^3$ | représente un atome d'hydrogène ou un groupe alkyle ou alcoxy comportant dans chaque cas de 1 à 4 atomes de carbone, |
| $R^4$ | représente un atome d'hydrogène ou un groupe alkyle comportant de 1 à 4 atomes de carbone, les deux groupes $R^3$ et $R^4$ étant en para l'un de l'autre lorsque ces deux symboles représentent autre chose qu'un atome d'hydrogène, |
| $R^5$ | représente un atome d'hydrogène, un groupe méthyle ou éthyle ou un groupe |

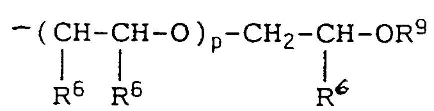

| | |
|---|---|
| $R^6$ | représente un atome d'hydrogène ou un groupe alkyle comportant 1 ou 2 atomes de carbone, |
| $R^8$ | représente un atome d'hydrogène, |
| $R^9$ | représente un atome d'hydrogène ou un groupe alkyle en $C_1-C_4$, |
| $R^{10}$ | représente un atome d'hydrogène ou de chlore ou un groupe sulfo, carboxy, méthyle, méthoxy, éthoxy, éthylcarbonylamino, éthoxycarbonyle ou hydroxyéthoxycarbonyle, |
| p | vaut 0 ou 1, et |
| M | représente un atome d'hydrogène ou un équivalent d'un cation incolore. |

**14.** Colorants conformes à la revendication 13, caractérisés en ce que $R^1$ représente un atome d'hydrogène ou un groupe méthyle ou méthoxy, $R^2$ représente un atome d'hydrogène ou un groupe méthyle, $R^3$ et $R^4$ représentent chacun, indépendamment l'un de l'autre, un atome d'hydrogène ou un groupe

méthyle, méthoxy ou éthoxy, $R^5$ représente un atome d'hydrogène ou un groupe hydroxyéthyle, $R^8$ et $R^9$ représentent chacun un atome d'hydrogène, $R^{10}$ représente un atome d'hydrogène ou un groupe sulfo ou carboxy, et M représente $Na^+$, $Li^+$ ou une alcanolamine en $C_4$-$C_6$ protonée.

**15.** Procédé de préparation de colorants disazoïques de formule (1) conformes à la revendication 1, caractérisé en ce que l'on fait réagir un composé de formule :

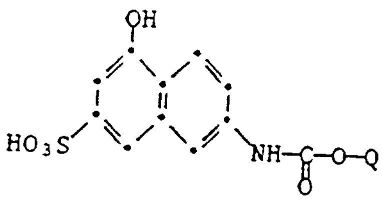

(3)

dans laquelle Q représente un groupe alkyle ou phényle éventuellement substitué, avec une amine de formule :

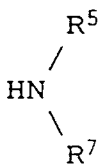

(4)

et l'on fait copuler soit le composé de formule (3), soit le produit de réaction du composé de formule (3) et de l'amine de formule (4), avec une amine de formule :

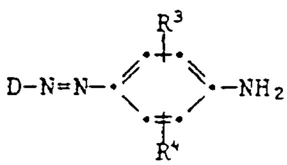

(5)

après diazotation de celle-ci,
$R^5$, $R^7$, D, $R^3$ et $R^4$ ayant les significations indiquées à propos de la formule (1).

**16.** Procédé conforme à la revendication 15, caractérisé en ce que l'on fait d'abord copuler un composé de formule (3) avec une amine de formule (5), diazotée, et l'on fait réagir ensuite le composé disazoïque obtenu avec une amine de formule (4), ces réactions étant réalisées sans que le produit intermédiaire soit isolé.

**17.** Procédé de préparation de colorants disazoïques de formule (1), conformes à la revendication 1, caractérisé en ce que l'on fait réagir de l'acide I (acide 7-amino-4-hydroxy-naphtalène-2-sulfonique) avec un isocyanate de formule :

OCN-A-Y' (6)

pour obtenir un composé de formule :

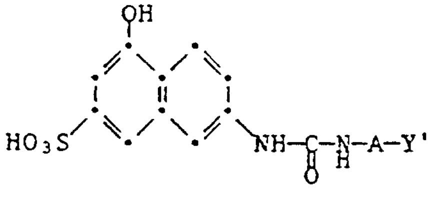

(7)

que l'on fait ensuite copuler avec une amine de formule :

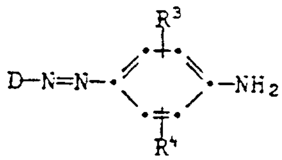

(5)

après diazotation de celle-ci,
Y' représentant un groupe phényle ou naphtyle qui porte ou non des substituants sulfo, halogéno, alkyle en $C_1$-$C_4$,alcoxy en $C_1$-$C_4$ ou (alcoxy en $C_1$-$C_4$)-carbonyle, et D, $R^3$ et $R^4$ ayant les significations indiquées à propos de la formule (1),
ou en ce que l'on fait copuler d'abord l'acide I avec une amine de formule (5), diazotée, et l'on soumet ensuite le produit de réaction à une acylation avec un isocyanate de formule (6).

**18.** Utilisation des composés de formule (1) conformes à la revendication 1 comme colorants pour la teinture et l'impression de matières textiles, de papier ou de cuir, ainsi que pour la préparation d'encres.

**19.** Utilisation conforme à la revendication 18, pour la teinture et l'impression de papiers de toutes sortes.

**20.** Papier teint avec des colorants de formule (1) conformes à la revendication 1.